# EUROPEAN PATENT APPLICATION

(11) **EP 0 806 337 A1**
(43) Date of publication of application: **12.11.1997**
(21) Application number: 97201319.7
(22) Date of filing: 02.05.1997
(51) Int. Cl.: B62D 11/04

(54) **Control system for small working machines such as lawn mowers and the like**

(30) Priority: 09.05.1996 IT RE960032
(71) Applicant: Gianni Ferrari S.r.l., 42046 Reggiolo, Reggio Emilia (IT)
(72) Inventor: Ferrari, Gianni Vando, 42045 Luzzara, Reggio Emilia (IT)
(74) Representative: Corradini, Corrado

(57) **Abstract**

A control system for small self-propelled machines with two drive wheels coupled to respective hydraulic drive motors (28) which also steer the machine, comprises a control stick device having a shaft (8) with two freedoms of movement, of which one is of oscillation and is contained in a longitudinal vertical plane of the machine, and the other is of rotation and occurs about the axis of said shaft, said two movements being under the control of a single operating member positioned at one end of the shaft 8, its opposite end being linked to two lever systems connected to the throughput adjustment means which are associated with said hydraulic motors.

## Description

This invention relates to a control system for small working machines, typically but not exclusively lawn mowers.

Essentially, modern lawn mowers comprise a frame provided with two front drive wheels and at least one rear swivel wheel, and on which an internal combustion engine is located to operate at least one hydraulic pump. The delivery of this latter is connected to two hydraulic motors coupled to the axles of said drive wheels, the machine speed and steering being controlled by adjusting the oil quantity passing through said hydraulic motors.

In a widely used technique, to which the invention particularly relates, such lawn mowers are operated by levers operable from the driving position and provided both for adjusting the machine speed and for steering the machine.

Specifically, when said levers are moved together the machine speed is varied, whereas when one is moved relative to the other the r.p.m. of the corresponding hydraulic motor varies relative to the r.p.m. of the other hydraulic motor, with the result that the machine is steered.

From the aforegoing it is evident that such a control system makes the driving of the machine particularly complicated, and can give rise to manoeuvring errors, such as choosing the wrong steering direction.

Moreover said known system is of complicated construction, normally involving a particularly large number of component parts, with consequent cost increase.

In addition the presence of said levers can create dangerous situations if the user, having descended from the machine but with the engine still operating, operates in proximity to said levers with the risk of inadvertently shifting them.

For this reason the known art comprises complicated electrically operated safety systems.

The main object of the present invention is to provide a control system which is able to eliminate the aforesaid drawbacks within the context of a simple and rational construction.

This is attained according to the invention by using a control stick device which replaces the levers of the aforesaid known art, and by which all the operations required for driving the moving machine can be controlled.

Specifically, said control stick device comprises a shaft possessing two freedoms of movement, both controllable by a steering wheel, of which one is of oscillation and is contained in a vertical longitudinal plane of the machine, preferably its longitudinal plane of symmetry, and the other is of rotation and takes place about the longitudinal axis of said shaft.

Preferably said shaft is positioned in the manner of a rocker arm on the machine frame, with one end connected to said steering wheel and the opposite end linked to two lever systems connected to means for adjusting the throughput of the hydraulic motors driving the machine drive wheels.

According to a preferred embodiment, the steering column of the steering wheel is connected to said shaft by way of a perpendicular bevel gear transmission and a telescopic cardan shaft, by which said steering wheel can be adjusted in both height and inclination.

According to an alternative embodiment said steering column is connected to said shaft via a train of grooved pulleys about which an endless transmission belt passes.

Finally, said linkage preferably consists of a gear system comprising a toothed pinion keyed onto the lower end of said shaft and lying between, and engaged with, two slidable rack elements connected to said lever systems.

Said rack elements each consist of a toothed sector which is constantly engaged with said pinion and is pivoted to a slide rod on a horizontal axis transverse to the machine.

According to an advantageous characteristic of the invention, said rods automatically return said lever systems to the neutral (or idle) position when the steering wheel is released.

Safety means are also provided to prevent untimely operation of said control stick device if the user is not in the driving position.

In particular, said means preferably consist of two catches associated with respective engagement seats provided in said rods, and are sensitive to the presence or absence of the user in the machine driving position.

The characteristics and constructional merits of the invention, and its operation, will be apparent from the detailed description given hereinafter with reference to the accompanying figures, which illustrate two preferred embodiments thereof by way of non-limiting example.
Figure 1 is a sectional side elevation of the invention.
Figure 2 is a section on the line II-II of Figure 1 to an enlarged scale.
Figure 3 is a section on the line III-III of Figure 1 to an enlarged scale.
Figure 4 is a section on the line IV-IV of Figure 3.
Figure 5 is a section on the line V-V of Figure 1 to an enlarged scale.
Figure 6 is a section on the line VI-VI of Figure 1.
Figure 7 is a view entirely similar to Figure 1, but showing an alternative embodiment of the invention.

Firstly, it should be noted that the overall structure of a self-propelled machine for receiving the system of the invention has not been shown for reasons of simplicity and clarity, however it is of the type described in the introduction, for example suitable for a lawn mower.

It should also be noted that unless otherwise indicated, the terms "longitudinal" and "transverse" generally mean orientations and arrangements of members which are positioned in accordance with the corresponding machine directions.

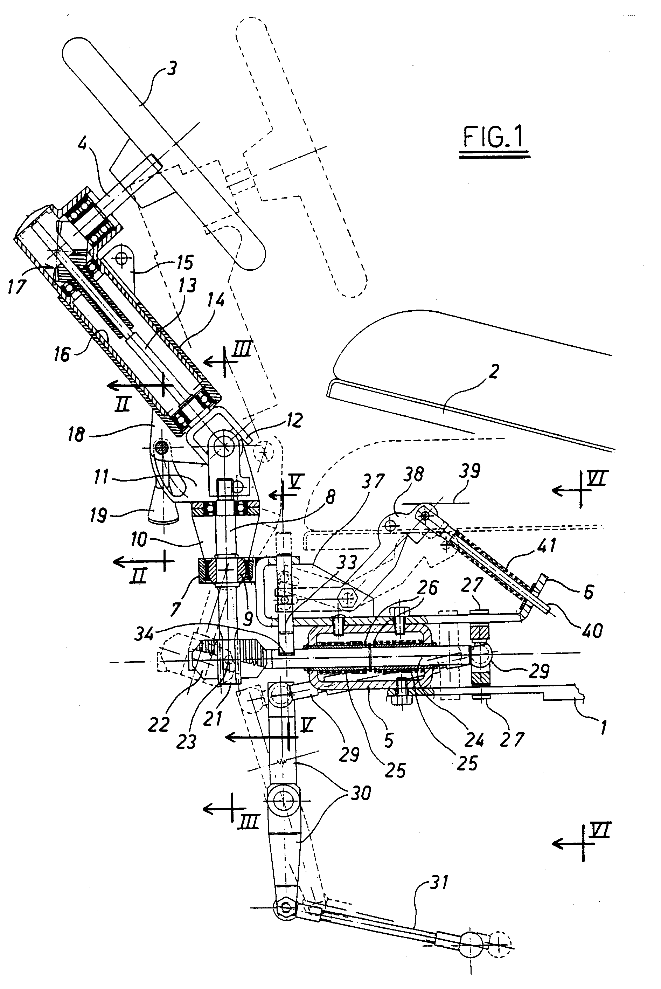

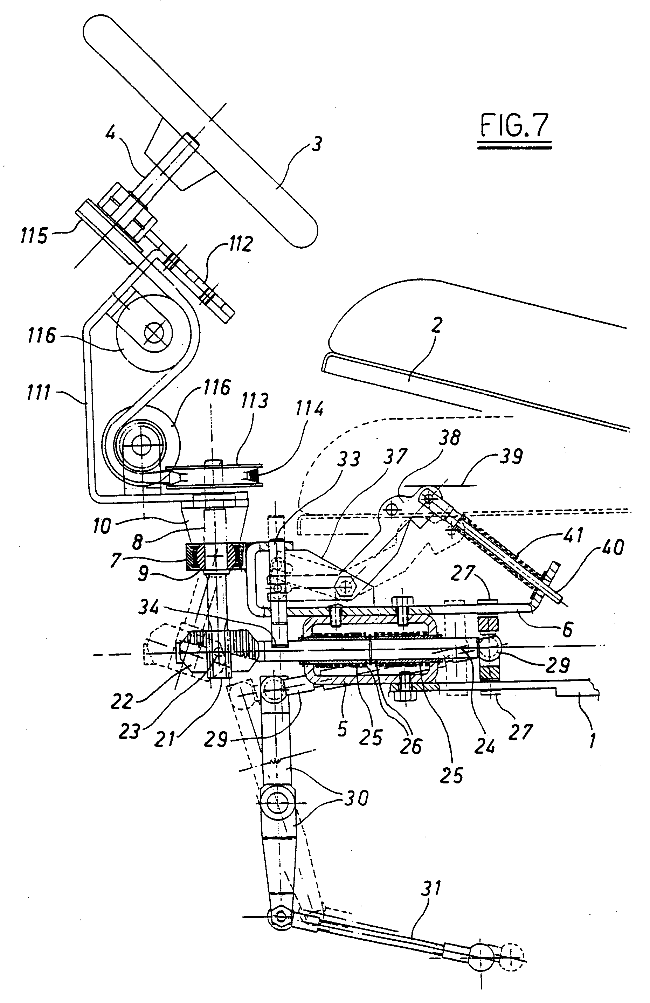

Said figures, and in particular Figures 1 and 7, show the front portion of the machine frame 1, on which there is located the driving position comprising a seat 2 and a steering wheel 3. On the front end of the frame 1 there is fixed a box casing 5 carrying a longitudinally profiled bracket 6, this latter being provided at its front with a projecting central support 7.

The support 7 supports a control stick device comprising a substantially vertical shaft 8 rockingly pivoted to said support 7, so that it can be swivelled in a longitudinal vertical plane. In this respect, said shaft 8 is mounted, rotatable but axially locked, in a transverse horizontal pin 9 which is pivoted to the support 7 and has its opposing ends connected to the arms of an inverted U-piece 10.

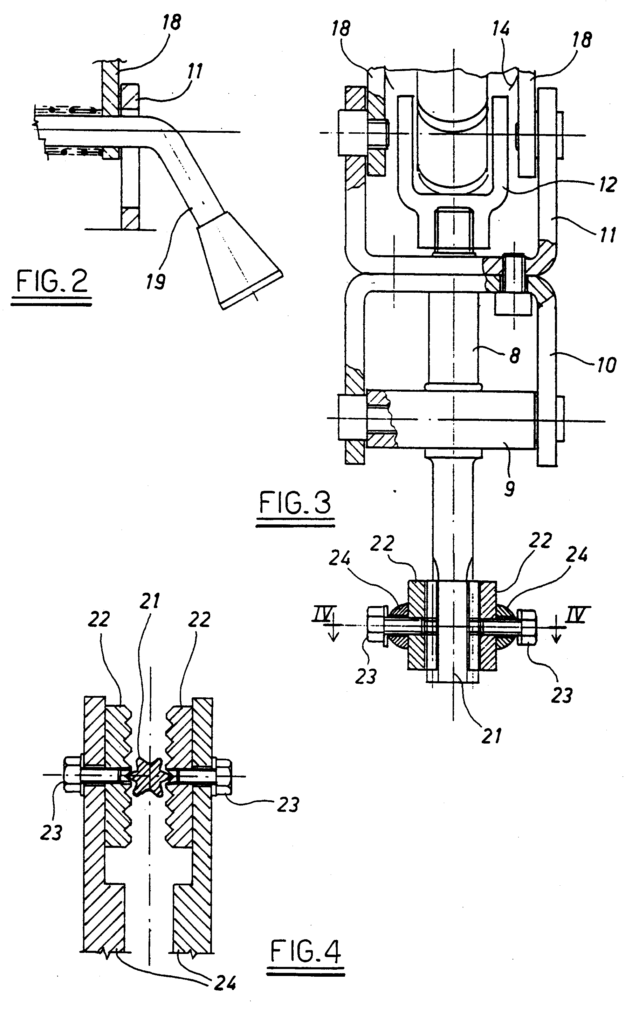

To the cross-member of said U-piece 10 there is fixed the cross-member of an overlying U-piece 11, best seen in Figure 3, beyond which the shaft 8 comprises a splined portion to which a universal joint 12 is coupled.

At its other end the joint 12 is provided with a splined shaft 13 mounted, rotatable but axially locked, within a split tube 14 upperly provided with a locking clamp 15 of screw type. Said tube 14 accommodates a right-angled sleeve 16, at the dihedron of which there are mounted the gearwheels of a bevel gear deviator pair 17.

One of said gearwheels is keyed to the steering column 4 of the steering wheel 3 (see Figure 1), the other gearwheel being slidingly mounted on said splined shaft 13. The described means enable the operating height of the steering wheel 3 to be adjusted.

Said tube 14 is lowerly provided with two front lugs 18 situated between the arms of the U-piece 11 and provided with a locking clamp 19, by which the inclination of the steering wheel 3 can be adjusted.

In the alternative embodiment of Figure 7 the two aforesaid adjustments are not provided, and the shaft 8 is rotated by a belt transmission.

To the U-piece 10 there is fixed an overlying profiled bracket 111 upperly provided with a plate 112 for supporting the steering column 4. The shaft 8 passes beyond the base of said bracket 111, where it carries a keyed pulley 113 for returing a V-belt 114. Finally, on the steering column 4 there is keyed a pulley 115 for dragging said belt 114, the outward and return portions of which pass over two pairs of coaxial idle pulleys 116 which are supported by said bracket 111.

The aforesaid elements are the only ones which differentiate the two preferred embodiments of the invention.

As can be seen, the lower end of the shaft 8 comprises a toothed portion 21 which lies between two toothed rack sectors 22. These latter are pivoted, on the transverse horizontal axes indicated by 23 (see Figure 4), to respective slidable longitudinal rods 24 which pass through the box casing 5.

On that part of each rod 24 which is received within this latter there are mounted two opposing compressed springs 25 which each lie between a respective snap ring 26 (Figures 1, 7) and the facing wall of said casing 5. The two springs 25 associated with each rod 24 are identical, in the sense that they are perfectly mutually balanced for the reasons stated hereinafter.

In addition, from Figures 1, 6 and 7 it can be seen that the free ends of said rods 24 rest against respective longitudinal sliders 27 which are engaged, as an exact but freely slidable fit, with said bracket 6 and said frame 1 respectively.

The right slider is connected to a lever system connected to the hydraulic motor 28 provided for rotating the left drive wheel (not shown) of the machine, the left slider 27 being connected to an identical lever system for the right drive wheel. Each lever system comprises in succession, starting from a slider 27 to terminate at the respective motor 28, a first connecting rod 29, a rocker lever 30 pivoted to the frame 1, a second connecting rod 31, and a usual lever 32 connected to likewise usual valve means for controlling the motor 28.

At this point it is apparent that by swivelling the shaft 8 in one direction or another the machine speed is adjusted (forward or rearward), and by rotating the shaft 8 about itself the machine steering is controlled, with one motor 28 receiving more oil than the other, which is traversed by a correspondingly smaller oil quantity.

When the steering wheel 3 is released, the control system is repositioned automatically in that configuration shown by full lines in Figures 1 and 7, the control stick device being able to be operated, as stated, only if the user is in the driving position.

This is because there is advantageously provided a safety unit which automatically locks the rods 24, which are released only if a person is present on the seat 2.

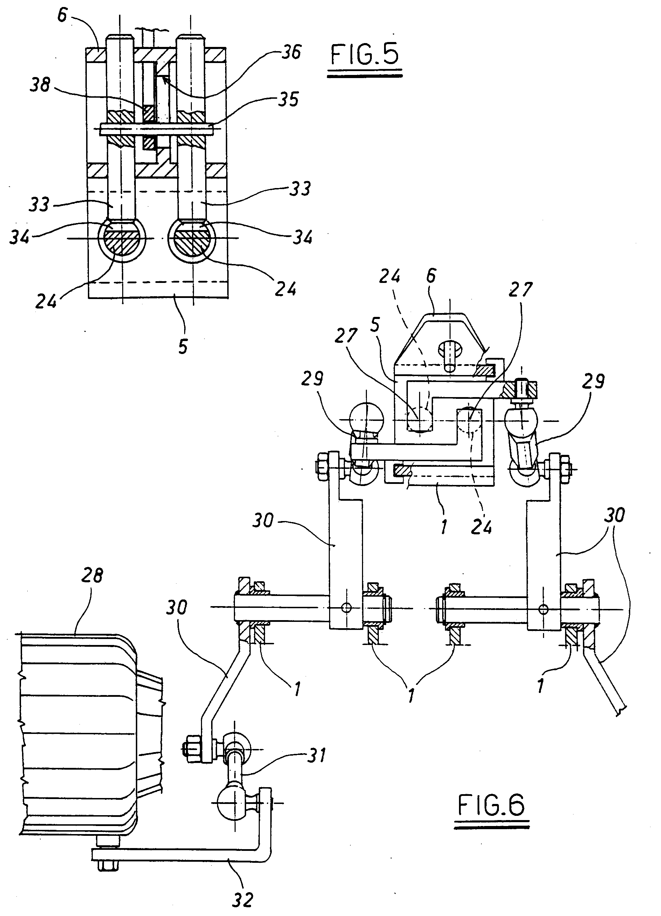

As can be seen in Figures 1, 6 and 7, said safety unit comprises two vertical catches 33 which are slidingly mounted at the front end of the bracket 6, and are associated with underlying coupling seats 34 provided in said rods 24. The catches 33 are connected together by a common transverse pin 35 (Figure 5) which is arranged to slide within a vertical slot 36 provided in a rib 37 rigid with the bracket 6.

Said pin 35 is connected to the front end of a rocker lever 38 which is pivoted to said rib 37, and of which the rear end has an arched portion which rests against an overlying plate 39 fixed below the seat 2.

Finally, to said rear end there is pivoted a descending inclined rod 40 which is freely inserted into an aperture in the bracket 6, and on which there is mounted a compressed repositioning spring 41 located between said bracket 6 and a retention shoulder on said rod 40.

The merits and advantages of the invention are apparent from the aforegoing and from an examination of the accompanying figures.

The invention is not limited to that illustrated and described, but includes all technical equivalents of the stated means and their combinations, if implemented within the context of the following claims.

## Claims

1. A control system for small self-propelled machines with two drive wheels coupled to respective hydraulic drive motors (28) which also steer the machine, characterised by comprising a control stick device having a shaft (8) with two freedoms of movement, of which one is of oscillation and is contained in a longitudinal vertical plane of the machine, and the other is of rotation and occurs about the axis of said shaft, said two movements being under the control of a single operating member positioned at one end of the shaft 8, its opposite end being linked to two lever systems connected to the throughput adjustment means which are associated with said hydraulic motors.

2. A system as claimed in claim 1, characterised in that said operating member is a steering wheel (3) associated with a driving position provided with a seat (2).

3. A system as claimed in the preceding claims, characterised in that said shaft (8) is mounted, rotatable but axially locked, in an idle horizontal pin (9) which is positioned transverse to the machine, and which is provided with a structure (10) for supporting the steering column (4) of the steering wheel.

4. A system as claimed in the preceding claims, characterised in that between said steering column and said shaft there is interposed a transmission enabling the steering wheel to be adjusted both in height and in inclination.

5. A system as claimed in claim 4, characterised in that said transmission comprises a perpendicular geared deviator (17) and a cardan shaft (12, 13), the first being associated with said steering column and the second being associated with said shaft.

6. A system as claimed in claims 4 and 5, characterised in that said height adjustment is achieved by a sleeve (16) containing said perpendicular deviator, and slidingly accommodated within a split tube (14) which is provided with a locking clamp (15) and is secured to the upstream end (13) of said cardan shaft on which there is provided a splined portion engaged with a conjugate splined hole provided in the driven gear of said deviator.

7. A system as claimed in claims 4 and 5, characterised in that said inclination adjustment is achieved by a locking clamp (19) interposed between at least one appendix (18) rigid with said tube (14) and at least one adjacent appendix (11) branching from said steering column support structure (10).

8. A system as claimed in claims 1 and 2, characterised in that said shaft (8) is rotated by a transmission comprising an endless belt (114) passing about two end pulleys (113, 115) keyed onto said shaft (8) and said steering column (4) respectively, and having its outward and return portions deviated about respective pairs of opposing idle grooved wheels (116) positioned on a profiled part (111) of said steering column support structure (10).

9. A system as claimed in claim 1, characterised in that said linkage interposed between said shaft (8) and said two lever systems comprises a toothed pinion (21) keyed on said shaft and lying between, and engaged with, two rack elements arranged in the machine longitudinal direction and engaged with one end of said lever systems.

10. A system as claimed in claim 9, characterised in that said rack elements each consist of a toothed sector (22) engaged with said pinion (21) and pivoted to a slidable rod (24) on a transverse axis (23) perpendicular to said shaft (8).

11. A system as claimed in claim 10, characterised in that with each rod (24) there are associated means for automatically returning this latter to its neutral position when the steering wheel (3) is free,

12. A system as claimed in claim 11, characterised in that said means comprise two identical compressed coaxial springs (25) which are mounted on respective portions of said rod (24) and of which each lies between a stop (26) rigid with the rod, and a stop rigid with the machine frame (1).

13. A system as claimed in claim 1, characterised in that said lever systems each comprise a rocker lever (30) pivoted to the machine frame (1), a first connecting rod (29) interposed between said lever (30) and the respective rod (24), and a second connecting rod (31) interposed between said lever (30) and said throughput adjustment means.

14. A system as claimed in claim 1, characterised by comprising an automatic safety unit arranged to prevent the operation of the control stick device if the user is not in the driving position.

15. A system as claimed in claim 14, characterised in that said unit comprises two catches (33) which are associated with respective coupling seats (34) provided in said rods (24), and are constantly urged towards these latter by elastic means (41) which are excluded by the lowering of the seat with said user thereon.
